# EUROPEAN PATENT APPLICATION

(11) **EP 1 437 888 A2**
(43) Date of publication of application: **14.07.2004**
(21) Application number: 03258187.8
(22) Date of filing: 23.12.2003
(51) Int. Cl.: H04N 5/76

(54) **Video recording and reproducing apparatus**

(30) Priority: 06.01.2003 KR 2003000654; 15.01.2003 KR 2003002812; 15.02.2003 KR 2003009600; 05.03.2003 KR 2003013812; 11.03.2003 KR 2003014965; 12.03.2003 KR 2003015533; 17.03.2003 KR 2003016409
(71) Applicant: Samsung Electronics Co., Ltd., Suwon-si, Gyeonggi-do 442-742 (KR)
(72) Inventor: Kim, Jong-phil, Suwon-si Gyeonggi-do (KR); Kang, Yun-ju, Yeongtong-gu Suwon-si Gyeonggi-do (KR); Lee, Chang-rok, Gangnam-gu Seoul (KR)
(74) Representative: Geary, Stuart Lloyd

(57) **Abstract**

An image recording/reproducing apparatus comprises an input unit for receiving a record command, and directing image data stored in an optical recording medium to be recorded in an internal recording medium, a video encoder for encoding the stored image data, a video decoder for decoding the image data which is encoded by the video encoder and a main control unit for controlling the video encoder and the video decoder to perform encoding and decoding with respect to the image data stored in the optical recording medium in response to the input of record command through the input unit, and also controlling the video decoder such that the image data can be decoded based on a predetermined TV broadcasting method which is applied during the encoding, and processing the decoded image data for recording in the internal recording medium.

## Description

The present invention relates to a video recording and reproducing apparatus comprising an television signal input, a hard disk drive for recording television signals received at said input and an optical disk drive.

Image recording/reproducing apparatuses, which record broadcasting signals on a recording medium and reproduce the recorded signals from the recording medium, are now equipped with a variety of functions due to development in the field of digital broadcasting and signal compression technology.

It is also the current trend that the image recording/reproducing apparatus be equipped with a hard disk drive (HDD) as a high capacity memory device. The HDD uses a random access, which accesses desired data using addresses, and enables data transmission at high speed and with maximum volume. Accordingly, the image recording/reproducing apparatus is widely used as a recording medium especially for the video/audio signal recording apparatus.

The image recording/reproducing apparatus is applied in numerous fields such as the satellite broadcasting signal, cable broadcasting, network broadcasting via the Internet and other various image/sound sources. Regardless of the image/sound sources the signals come from, all the signals are stored in a storage means such as the HDD as mentioned above, and then divided into sub-structures such as folders and stored.

An apparatus, according to the present invention, is characterised by means for reading data from the optical disk drive and recording it in the hard disk drive.

It is a first aspect of the present invention to provide an image recording/reproducing apparatus and control method thereof which is capable of, when the operation shifts to power-off mode during the recording of temporarily-recorded data of the temporary recording area onto the hard disk drive (HDD), recording the temporarily-recorded image/sound signals onto the HDD before shifting to the power-off mode.

It is a second aspect of the present invention to provide an image recording/reproducing apparatus and control method thereof capable of recording the currently-viewed data from a desired location onto the HDD.

It is a third aspect of the present invention to provide an image recording/reproducing apparatus and control method thereof which is capable of efficient data management, by categorizing the HDD into clusters of plural sizes, and controlling the clusters such that the files can be recorded in appropriate clusters according to the types of the files, respectively.

It is a fourth aspect of the present invention to provide an image recording/reproducing apparatus and control method thereof which is capable of, in recording image/sound signals in the HDD, preventing using-up of the capacity for the editing of recorded image/sound signals and subsequent inability of editing.

It is a fifth aspect of the present invention to provide an image recording/reproducing apparatus and control method thereof which is capable of preventing system booting error during the initialization of the HDD.

It is a sixth aspect of the present invention to provide an image recording/reproducing apparatus and control method thereof which is capable of, in recording the image/sound signals of the recording medium in the HDD, recording the image/sound signals in the HDD in accordance with the TV broadcasting method which was detected during reproducing.

It is a seventh aspect of the present invention to provide an image recording/reproducing apparatus and control method thereof which is capable of automatically deleting error file which is unnecessarily stored in the HDD during the operation of the image recording/reproducing apparatus.

In order to achieve the above aspects and/or other features of the present invention, the image recording/reproducing apparatus comprises an input unit for receiving a record command directing image data stored in an optical recording medium be recorded in an internal recording medium, a video encoder for encoding the stored image data, and a video decoder for decoding the image data which is encoded by the video encoder. The image recording/reproducing apparatus further comprises and a main control unit for controlling the video encoder and the video decoder to perform encoding and decoding with respect to the image data stored in the optical recording medium in response to the input of a record command through the input unit, and also controlling the video decoder such that the image data can be decoded based on a predetermined TV broadcasting method which is applied during the encoding, and processing the image data such that the decoded image data can be recorded in the internal recording medium.

The video decoder comprises a register, which records in a predetermined area, the setting values with respect to a TV broadcasting method, and a main control unit which controls the updating of the setting values of the TV broadcasting method based on the predetermined TV broadcasting method applied during the encoding, and controls the video decoder to decode the data based on the updated setting values of the TV broadcasting method.

According to an embodiment of the present invention, a control method of an image recording/reproducing apparatus for recording image data stored in an optical recording medium onto an internal recording medium, is provided. The control method comprises the steps of encoding the image data stored in the optical recording medium in accordance with a predetermined TV broadcasting method, detecting the predetermined TV broadcasting method which is applied during the encoding, and decoding the encoded image data in accordance with the detected predetermined TV broadcasting method.

The predetermined TV broadcasting method can be either NTSC, PAL or SECOM.

An embodiment of the present application will now be described, by way of example, with reference to the accompanying drawings, in which:
Figure 1 is a schematic view of a system of an image recording/reproducing apparatus according to the present invention;
Figure 2 is a schematic block diagram of the image recording/reproducing apparatus of Figure 1;
Figure 3 is a view schematically showing the logical structure of the HDD of Figure 2;
Figure 4 is a view illustrating the arrangement of a cluster in the HDD of Figure 2;
Figure 5 is a plan view of the remote controller of Figure 1;
Figure 6 is a flowchart illustrating a control method of the image recording/reproducing apparatus of Figure 2;
Figure 7 is a block diagram of the data management unit of Figure 2;
Figure 8 is a block diagram illustrating the file arrangement structure and storage method for temporary files in the HDD of Figure 2;
Figures 9A and 9B are block diagrams illustrating a process in which the temporary recording area B and the long-term recording area A are re-designated by the data management unit;
Figure 10 is a flowchart illustrating a method of storing files as generated in the image recording/reproducing apparatus;
Figure 11 is a block diagram of the data management unit of the image recording/reproducing apparatus of Figure 2;
Figure 12A is a view illustrating one example of a secondary screen for selecting the cluster size;
Figure 12B is a view illustrating a secondary screen for selecting whether to proceed with the formatting of the HDD;
Figure 12C is a view illustrating the arrangement of clusters in the HDD;
Figure 13A is a flowchart illustrating a method of dividing and formatting the clusters;
Figure 13B is a flowchart illustrating a method of storing the files in the divided clusters;
Figure 14 is a view illustrating a menu guide list screen which is displayed subsequent to the selection of an edit menu on the initial guide menu screen;
Figure 15 is a view illustrating a screen displayed subsequent to the selection of the combine menu of Figure 14;
Figure 16 is a view illustrating a screen displayed subsequent to the selection of the divide menu of Figure 14;
Figure 17 is a block diagram illustrating the structure of programme information which is stored in the HDD of Figure 2;
Figure 18 is a flowchart illustrating a control method of the HDD of the image recording/reproducing apparatus;
Figure 19 is a flowchart illustrating an initialization method of the image recording/reproducing apparatus of Figure 2;
Figure 20 is a flowchart illustrating a method of detecting the TV broadcasting method of the image/sound signals recorded in the recording medium by the image recording/reproducing apparatus, and the detected TV broadcasting method is applied during the storing of the signals in the HDD;
Figure 21 is a view illustrating the programme file as a motion picture file, which is recorded in the HDD;
Figure 22 is a view illustrating a screen which is displayed when the programme list function is performed; and
Figure 23 is a flowchart illustrating a method of automatically deleting error files of the image recording/reproducing apparatus.

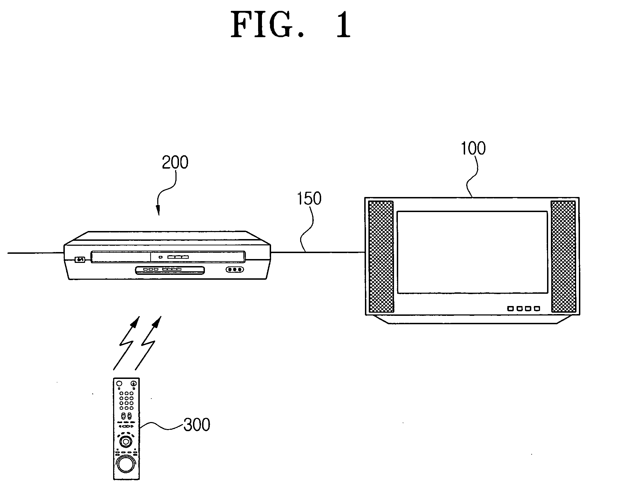

Referring to Figure 1, the image recording/reproducing apparatus 200 is connected to a television 100 as a display device via transmission cable 150.

The image recording/reproducing apparatus 200 processes signals received from an external input device such as a remote controller 300, and transmits display information to the television 100. The external input device can also include wired type of input devices such as keyboard, in addition to the remote controller 300 as employed herein by way of example sending and receiving wireless signals such as infrared rays. For convenience in the following discussion, the external input device will be described as the remote controller 300 in this and other embodiments of the present invention. However, it should be noted that the same will not be considered as limiting the scope of the various embodiments of the present invention.

The image recording/reproducing apparatus 200 is connected to receive video/audio signals from at least one video source, which can include, among others, cable broadcasting, satellite broadcasting, local cable, digital broadcast source (DBS), Internet, camcorder, disk player, and a settop box.

Examples of the image recording/reproducing apparatus 200 can include a VCR, DVDP, PVR, VCR/DVDP combination system, and HDD/DVDP combination system, and in the following description of the embodiments of the present invention, the HDD/DVDP combination system will be used in describing the image recording/reproducing apparatus 200. The HDD/DVDP combination system is a combined form of HDD and DVDP, and is equipped with the function of recording/reproducing various data which can include a text file, as well as the function of recording/reproducing motion picture files, still image files and audio files consisting of video/audio signals.

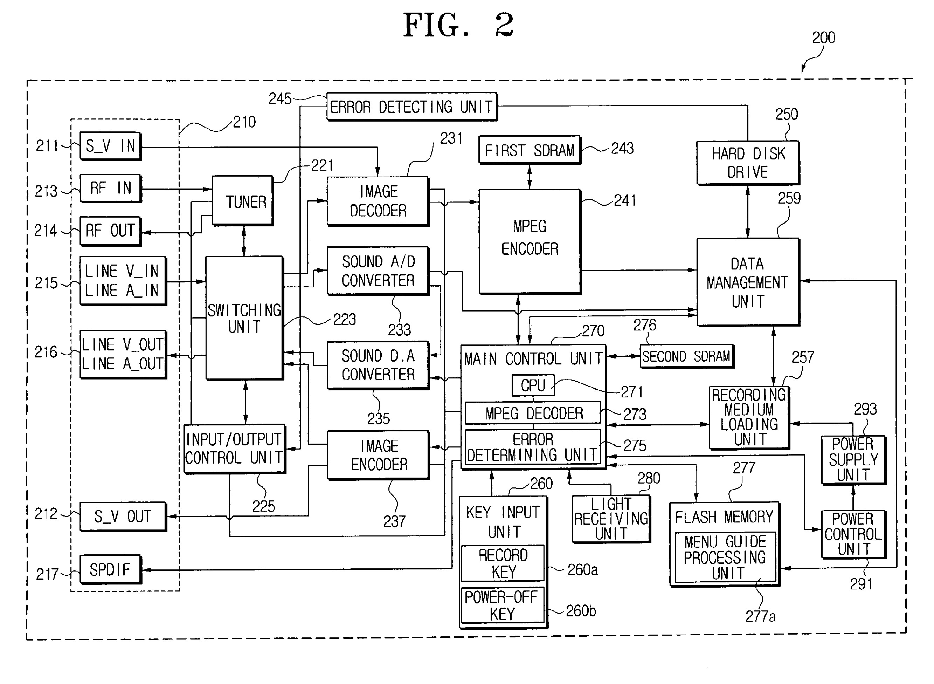

Referring to Figure 2, the image recording/reproducing apparatus 200 includes an input/output terminal unit 210, a tuner 221, a switching unit 223, an input/output control unit 225, an MPEG encoder 241, a hard disk drive (HDD) 250, a recording medium loading unit 257 and a main control unit 270.

The input/output terminal unit 210 receives signals generated from various video signal sources, and outputs the received signals, or signals reproduced from the HDD 250 which is adopted as a high-capacity recording medium.

The input/output terminal unit 210 includes a super video input terminal (S_V IN) 211 and super video output terminal (S_V OUT) 212, an RF input terminal (RF IN) 213 and an RF output terminal (RF OUT) 214, a line video/audio input terminal (LINE V_IN, LINE A_IN) 215 and a line video/audio output terminal (LINE V_OUT, LINE A_OUT) 216, and a digital audio output terminal (serial parallel digital interface (SPDIF)) 217.

S_V IN 211 receives both brightness and chrominance signals Cr, Cb, which are divided from each other in digital forms, and are used in connection with the digital camcorder, DVDP and settop box. The S_V OUT 212 outputs the brightness signal Y and chrominance signal Cr, Cb divided in digital forms, to the television 100.

RF IN 213 receives an airwave broadcasting signal, and is usually connected to an antenna. The RF OUT 214 sends out broadcast signals tuned by the tuner 221 (described in greater detail below), and is usually connected with the television 100.

LINE V_IN/LINE A_IN 215 receives a mixed signal of brightness signal Y and chrominance signal Cr, Cb in an analog format, and is used in connection with a camcorder, DVDP or settop box, all of which supports an analog video output. LINE V_OUT/LINE A_OUT 216 receives a mixed signal of brightness signal Y and chrominance signal Cr, Cb in an analog format (from switching unit 223), and is connected to the television 100 which can display analog video signals.

SPDIF 217 outputs a digital audio signal which is transmitted from the main control unit 270.

The tuner 221 causes the broadcasting signals of the channel, which is requested by the input/output control unit 225 under the control of the main control unit 270, to be received through the RF IN 213.

The switching unit 223 is controlled by the input/output control unit 225 to selectively connect the input/output terminals.

The input/output control unit 225 is controlled by the main control unit 270, and controls the tuner 221 and the switching unit 223.

The video decoder 231 is controlled by the main control unit 270 and decodes the signals received through the S_V IN 221 or through the switching unit 223, and outputs the decoded signals.

An audio A/D converter 233 is provided to convert the analog audio signals, which are routed through the switching unit 223, into digital signals, and output the converted digital signals to a data management unit 259.

An audio D/A converter 235 is also provided to convert the digital audio signals, which are output from the audio A/D converter 233, into analog audio signals, and output the converted analog audio signals to the switching unit 223.

A video encoder 237 encodes the video signals output from the video decoder 231 or the MPEG decoder 273 and outputs the encoded signals to the switching unit 223.

The MPEG encoder 241 is controlled by the main control unit 270, and encodes the video signals being output from the video decoder 231 according to a predetermined compression format, and provides the encoded video signals to the HDD 250 or the MPEG decoder 273 under the control of the main control unit 270. Preferably, the MPEG encoder 241 encodes video signals in accordance with the MPEG-2 system of compression.

First SDRAM 243 is a predetermined buffer where the video signals encoded at the MPEG encoder 241 are recorded.

The image recording/reproducing apparatus has an error detecting unit 245, which detects errors in the operation of the system. The error detecting unit 245 determines whether an error has occurred in the recording operation with respect to the HDD 250, while the motion picture data is recorded on the data recording regions by the HDD 250. The error detecting unit 245 transmits the result of the detection to the main control unit 270.

The HDD 250 is a high-capacity memory device in which a variety of data is recorded. The data includes: motion picture files, still image files, music files, and files resulting from broadcast signals. The files resulting from broadcast signals are comprised of a group of picture (GOP) video signal encoded by the MPEG encoder 241 and/or audio signals output from the audio signal A/D converter 233, files provided from an optical recording medium loaded on the recording medium loading unit 257 and text files.

Generally, HDD 250 records data in a cluster unit which is comprised of at least two sectors. Accordingly, in a recording operation, data is directly recorded using the address of the un-written cluster, while in a searching operation, a random access approach is used so that the data of the intended cluster is accessed using the address of the cluster. Because it is possible to transmit data at high speed and with large volume with the HDD 250, HDD 250 is very useful when used as the video/audio signal recording medium.

The recording medium loading unit 257 is provided inside the image recording/reproducing apparatus 200. The recording medium loading unit 257 is controlled by the main control unit 270 and records externally-input data onto an optical disk recording medium and/or loads video/audio signals recorded in the optical recording medium for a reproducing operation. A DVDP can be adopted as the recording medium loading unit 257, and a DVD, audio and/or video CD can be adopted for the optical recording medium.

Under the control of the main control unit 270, the data management unit 259 provides a transmission path for the data recorded in the HDD 250, and the data recorded in the optical recording medium being inserted in the recording medium loading unit 257. The data management unit 259 provides the recorded data of the HDD 250 to the optical recording medium being loaded in the recording medium loading unit 257, provides the recorded data of the optical recording medium to the HDD 250, or provides the encoded data of the MPEG encoder 241 to the HDD 250.

Further, the data management unit 259 is responsible for the management of the recording and reproducing of the data with respect to the HDD 250 and/or recording medium loading unit 257. Under the control of the main control unit 270, the data management unit 259 manages the storing of the recorded data of the recording medium loading unit 257 to the HDD 250, the storing of the recorded data of the HDD 250 to the recording medium loading unit 257, and the storing of the encoded data of the MPEG encoder 241 to the HDD.

A key input unit 260 is provided, which includes a plurality of numeric keys, direction keys and function keys to output to the main control unit 270 the manipulation signals for the setting or manipulation of the functions supported by the image recording/reproducing apparatus 200. The key input unit 260 is provided in the main body of the image recording/reproducing apparatus 200.

The key input unit 260 is further provided with a recording key 260a and a power-off key 260b. The recording key 260a creates a record-request command, requesting that the data for recording be recorded in the HDD 250, and the power-off key 260b creates a power-off command, requesting that the image recording/reproducing apparatus 200 be turned off. Preferably, the recording key 260a and/or the power-off key 260b may be provided not only to the key input unit 260, but also to the remote controller 300.

The main control unit 270 is formed in a single IC chip, which integrates therein the CPU 271 and the MPEG decoder 273 to decode the signals in MPEG compression format. The MPEG decoder 273 can be separated into another chip and connected to the main control unit 270 as desired.

The main control unit 270 has an error determining unit 275. The error determining unit 275 determines the presence of an error file among the programme files recorded in the HDD 250. The main control unit 270 controls the HDD 250 to delete the file determined by the error determining unit 275 to be an error file.

The second SDRAM 276 is a certain type of buffer in which decoded signals from the MPEG decoder 273 are temporarily recorded.

The flash memory 277 records a plurality of programmes with respect to the function execution of the main control unit 270.

In the image recording/reproducing apparatus 200 constructed as described above, the main control unit 270 loads corresponding operating programs from the flash memory 277 for the functions selected by the user manipulation signal which is received either from the key input unit 260 or from the remote controller 300 through the light receiving unit 265. The main control unit 270 thus supports/processes the respective functions, and controls the respective parts.

The flash memory 277 has a menu guide processing unit 277a. The menu guide processing unit 277a stores therein a program to process graphic user interface (GUI) screens such as menu guide list screen which will be described in greater detail below. The GUI screens are graphic screens which are provided for the convenience of user in selecting respective functions of the image recording/reproducing apparatus 200. The GUI screens are provided through an output terminal connected with the television 100, such as a line video/audio output terminal 216.

Light receiving unit 280 is an interface which receives user manipulation signals from the remote controller 300 as an external input device, and outputs them to the main control unit 270.

Further, the image recording/reproducing apparatus 200 also includes a power control unit 291 and a power supply unit 293. In response to an input of reset command from the main control unit 270 which requests that the image recording/reproducing apparatus 200 be re-started, the power control unit 291 controls the power supply unit 293 to stop power supply and re-supply later. The power supply unit 293 converts input power into predetermined levels and supplies converted power to the respective units of the image recording/reproducing apparatus 200 as necessary.

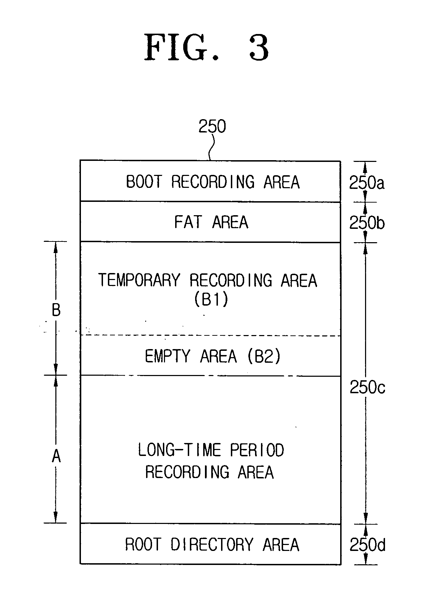

Referring to Figure 3, the HDD 250 includes a boot recording region 250a, a file allocation table (FAT) region 250b, a data recording region 250c and a root directory region 250d.

The boot recording region 250a is where the information regarding physical structure of the HDD 250, such as the information about drive partition, is recorded.

The FAT region 250b records the status information which indicates in which cluster of the data recording region 250c that the data to be recorded is located. If a big file is to be recorded in the HDD 250, the file is divided into a plurality of clusters and recorded. In dividing the single file into a plurality of clusters, the clusters are not necessarily positioned in a consecutive manner. It is also possible that the divided file is distributed in the HDD 250 in a nonconsecutive manner. In this case, the location information about the plurality of clusters regarding the file is managed by the file allocation table (FAT) of the HDD 250. The FAT region 250b records the location information regarding at least one cluster of the file of the data recording region 250c (which will be described in greater detail below) where the file is recorded. When the file is divided and recorded into a plurality of clusters, addresses of the clusters are recorded in the FAT region 250b accordingly, and every time that certain data is recorded or deleted with respect to the respective clusters, the information of the FAT region 250b is updated.

The data recording region 250c is where the data to be recorded is physically recorded. The data recording region 250c is divided into a long- time period recording region A and a non-recording region B.

The long-time period recording region A is a non-volatile recording area where the data to be recorded, such as image/sound signals, is formatted into a file and recorded for a long time period according to the recording command from the user. The file which is recorded for a long time period can be edited according to the preferences of the user.

The non-recording region B refers to a region where no data is recorded. The temporary recording region B1 of the non-recording region B is allocated adaptively for the time delay viewing function, and the rest of the non-recording region B remains as an empty recording region B2.

The temporary recording region B1 is a volatile recording area is used to temporarily record the currently-viewing programmes, for the time delay viewing functions. The temporary recording region B1 can be used for temporarily recording the externally-received programmes on a first-in first-out (FIFO) basis.

If a long-time period recording command is applied with respect to the programme which is temporarily recorded in the temporary recording region B1, the requested programme is recorded on a long-time basis in the area of the long-time period recording region A which holds no data.

The root directory region 250d records therein attribute information and location information of the recording data recorded in the data recording region 250c on a long-time and temporary basis, and can be divided into a plurality of recording clusters where the attribute information and location information of the data to be recorded is recorded, and a plurality of non-recording clusters which hold no attribute information and location information. The attribute information of the file generated by the main control unit includes information of the data to be recorded such as a file name, a file size, recording date/time, image quality information and sound quality information, and the location information includes recording-start address and recording-finish address of the data to be recorded. Also, with the edition of the file such as recording and deletion, the status information of the FAT region 250b, and the attribute information and location information of the root direction region 250d are updated accordingly.

The root directory recording region 250d has a time map (TMAP) structure indicated by the '*.map' file, which is generated by the main control unit 270 during the generation of a predetermined recording data. The data to be recorded is then connected with the location information in the FAT region 250b and the attribute information in the attribute information region by the TMAP.

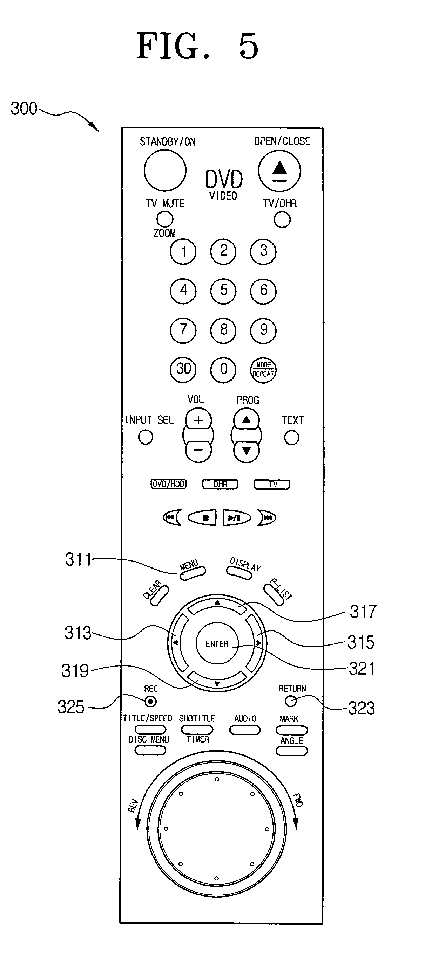

Referring now to Figure 5, the manipulation with respect to the menu guide list screen (which will be described in greater detail below) will be described.

The menu key 311 is used to order a loading of the menu guide list screen. More specifically, the up, down, left and right direction keys 317, 319, 313, 315 are used to direct a cursor with respect to a plurality of menus in the list of the menu guide list screen, and an entry key 321 is used to select the menu, and a return key 323 is used to return the currently-viewing screen to a previous one. A recording key (REC) is used to record file such as motion picture files.

The other keys are manipulation or special keys for the manipulation of the image recording/reproducing apparatus 200 and the television 100, which can be easily understood by the letters marked nearby. Accordingly, detailed description on the other keys will be omitted for brevity.

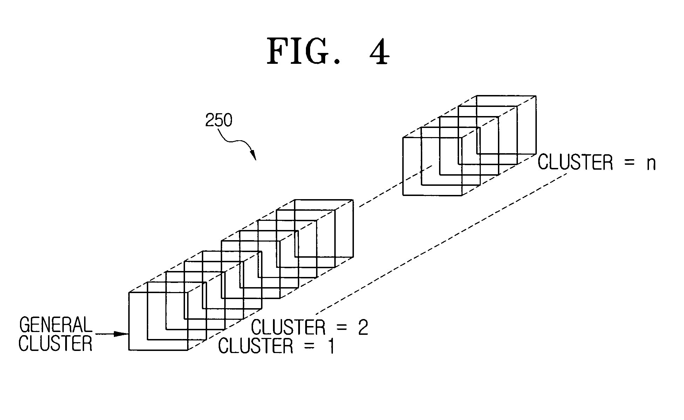

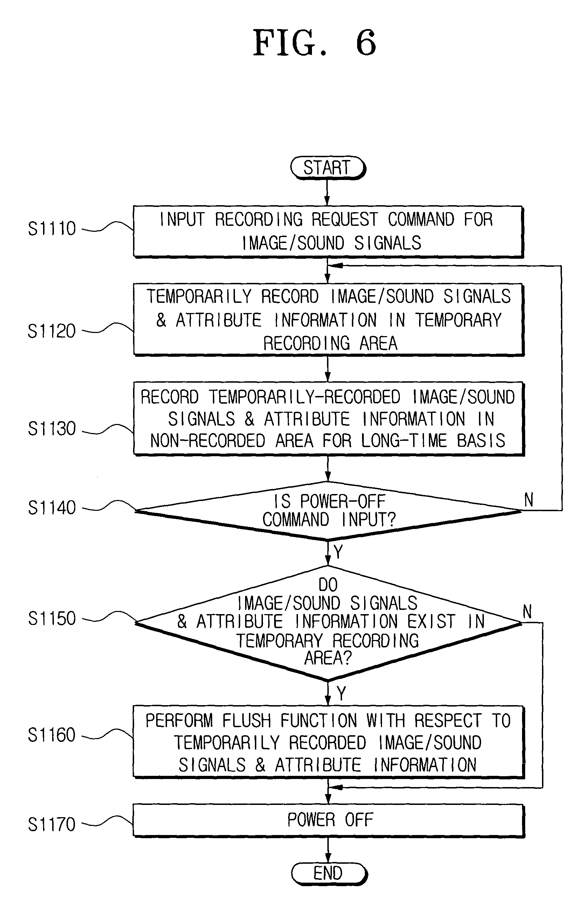

According to a first preferred embodiment of the present invention, which is provided in an effort to accomplish the first aspect of the present invention, if a mode shifting command to the power-off mode is input during the recording of certain image/sound signals on the HDD 250, the image recording/reproducing apparatus performs a flush function with respect to temporarily-recorded image/sound signals. This function and the control method thereof will be described in greater detail below with reference to Figures 1 to 6. The 'flush' function refers to a function that forcibly causes the data of the volatile memory area such as temporary recording area to be recorded in the non-volatile memory area such as long-time period recording area inside the HDD 250.

Referring to Figures 2 and 3, when the recording request command is input from the recording key 260a of the key input unit 260, the data management unit 259 under the control of the main control unit 270 reads information about the clusters of the data recording area 250c recorded in the FAT area 250b, such as location information of the clusters and information as to whether the data is recorded in the clusters, and causes the read information to be temporarily recorded in the temporary recording area B1.

The data management unit 259 also causes the data for recording, which is temporarily recorded in the temporary recording area B1, to be recorded in a plurality of un-recorded clusters of the data recording area 250c, and also causes the attribute information to be divided into certain size and recorded in a plurality of un-recorded clusters of the root directory area 250d for a long-time basis, based on the information read from the FAT area 250b regarding the respective clusters. The data management unit 259 also controls the temporary recording area B1 and the long-time period recording area A so that updated cluster information can be recorded in the FAT area 250b.

Referring to Figures 2, 3 and 6, when the recording request command is input by the selection on the recording key 260a of the key input unit 260 with respect to certain data for recording, the main control unit 270 generates attribute information about the data for recording, and processes the attribute data such that the generated attribute information and data for recording can be provided to the HDD 250 through the data management unit 259 (step S1110). The second preferred embodiment of the present invention will be described in greater detail below, with the image signals encoded by the MPEG encoder 241 and the sound signals converted by the sound A/D converter 233 as an example of the data for recording.

When the image/sound signals are provided to the HDD 250 together with the attribute information of the provided image/sound signals (hereinafter shortly referred as 'attribute information') in S1110, the data management unit 259 processes the attribute information and image/sound signals such that the image/sound signals and the attribute information can be temporarily recorded in the temporary recording area B1 (step S1120). Further, in S1120, the data management unit 259 reads from the FAT area 250b of the long-time period recording area A the information about the respective clusters of the long-time period recording area A, such as the location information of the clusters, information as to whether the data is recorded in the clusters, and processes that information such that the read information can be temporarily recorded in the temporary recording area B1.

Based on the information on the respective clusters which is read from the FAT area 250b, the data management unit 259 checks the location information about the un-recorded cluster which holds no data therein, and processes that information such that the image/sound signals can be recorded in a plurality of unrecorded clusters of the data recording area 250c, and the attribute information can be divided and recorded in the plurality of un-recorded clusters of the root directory area 250d for a long-time basis (step S1130). After step S1130, the information recorded in the FAT area 250b is updated.

After S1130, when the power-off command is input from the power-off key 260c, the main control unit 270 notifies the data management unit 259 of the input of the power-off command ("Yes" path from decision step S1140). Accordingly, the data management unit 259 determines whether the image/sound signals, attribute information and information about the respective clusters are temporarily recorded in the temporary recording area B1 (decision step S1150).

If it is determined in S1150 that the image/sound signals, attribute information and information about the respective clusters are temporarily recorded ("Yes" path from decision step S1150), the data management unit 259 performs the flush function with respect to the image/sound signals, attribute information and information about the respective clusters temporarily recorded in the temporary recording area B1 (step S1160). The data management unit 259 checks the location information about un-recorded clusters and processes that information such that the image/sound signals are recorded in the plurality of un-recorded clusters of the data recording area 250c, the attribute information is recorded in the plurality of un-recorded clusters of the root directory area 250d, and the information about the respective clusters is recorded in the FAT area 250b, forcibly and on a long-time basis.

After S1160, the main control unit 270 turns off the image recording/reproducing apparatus (step S1170).

Accordingly, even when a shift command to power-off mode is input during the recording process of the image/sound signals, because the flush function is performed before the apparatus is turned off, the image/sound signals, attribute information and updated cluster information temporarily recorded in the temporary recording area B1 of the HDD 250 can be recorded in the long-time recording area A on a long-time basis instead of being lost.

If it is determined, however, in decision step S1150 that the image/sound signals, attribute information and cluster information is not temporarily recorded ("No" path from decision step S1150), the main control unit 270 turns off the recording/reproducing apparatus according to a determination signal notified from the data management unit 259 (step S1170).

The second preferred embodiment of the present invention is preferably aimed to achieve the second object of the present invention, in which an image recording/reproducing apparatus is capable of storing currently-viewed image/sound signals from a desired point. Hereinbelow, the image recording/reproducing apparatus and control method thereof according to the third preferred embodiment of the present invention will be described in detail with reference to Figures 1, 2 and 7 to 10.

According to the third preferred embodiment of the present invention, the remote controller 300 controls the image recording/reproducing apparatus 200 from a remote distance. In order to store image/sound signals of the temporary recording area B1, the user presses a temporary area shift key (not shown) of the remote controller 300 to reproduce the image/sound signals temporarily recorded in the HDD 250 to the television 100, and searches the reproducing direction of the image data on the screen in up, down, left and right directions through the direction keys 317, 319, 313, 315. The user then sets the image/sound signals of the temporary recording area B1 to the long-time recording area A by pressing a recording key 325.

In perceiving that a control signal has been generated by the temporary area shift key (not shown) of the remote controller 300 through the light receiving unit 280, the main control unit 270 causes the image/sound signals being temporarily recorded in the HDD 250 to be applied to the image encoder 237 and the sound D/A converter 235, instead of the image/sound signals from the image decoder 231 and the sound A/D converter 233. The image/sound signals output from the image decoder 231 and the sound A/D converter 233 are continuously recorded in the temporary recording area B1 of the HDD 250.

The light receiving unit 280 receives the remote control signals generated from the recording key 325, the temporary area shifting key (not shown) and the direction keys 317, 319, 313, 315, and applies the received signals to the main control unit 270. The temporary area shifting key (not shown) is used to generate a control signal to reproduce the image/sound signals being temporarily recorded in the HDD 250 to the television 100, and the direction keys 317, 319, 313, 315 are used to generate a control signal to shift the reproducing location of the image/sound signal on the television 100 after the pressing of the temporary area shifting key (not shown). The recording key 325 is used to generate a control signal to permanently store the image/sound signals of the temporary recording area B1 of the HDD 250 in the reproducing location selected by the direction keys 317, 319, 313, 315.

As described above, the HDD 250 has the temporary recording area B1 and the long-time period recording area A. The temporary recording area B1 is used to temporarily store the broadcasting signal, which is converted into MPEG format by the MPEG encoder 241, for a predetermined time such as one hour on a FIFO basis. The long-time period recording area A is to store the broadcasting signal in MPEG format through the recording key 325 generated from the remote controller 300. The temporary recording area B1 and the long-time period recording area A are not fixed, but can be re-allocated by the data management unit 259 in accordance with the size of the storage area while the image/sound signals being temporarily recorded in the temporary recording area B1 is permanently recorded in the form of a file by the recording key 325 of the remote controller 300. The re-allocation of the area is not based on the direct logical dividing, but based on the area information generated from the data management unit 259 to the main control unit 270. When the main control unit 270 records temporary data based on the area information, the location for temporary recording can vary in accordance with the location information outputted from the data management unit 259.

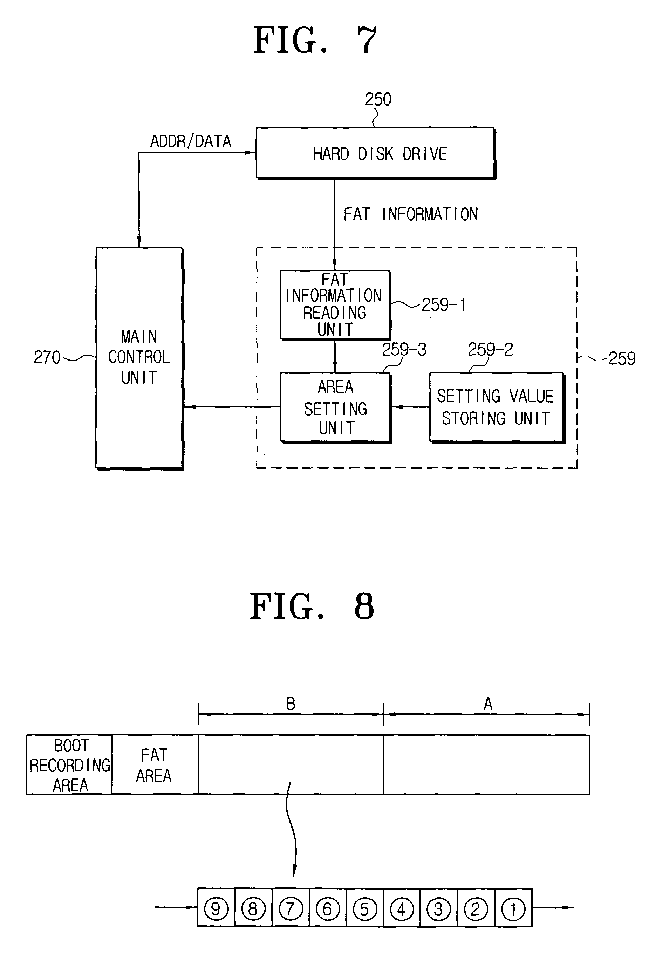

Figure 7 is a detailed block diagram of the data management unit 259 of Figure 2.

The data management unit 259 includes a FAT information reading unit 259-1, a setting value storage unit 259-2 and an area setting unit 259-3.

The FAT information reading unit 259-1 reads from the FAT of the HDD 250 the address information (i.e., the location information) about the files as stored. According to the address information as read, the information about the temporary recording area B1 and the long-time period recording area A of the HDD 250 are obtained. Every or nearly time the FAT of the HDD 250 is updated, the FAT information reading unit 259-1 reads the updated FAT.

The setting value storage unit 259-2 contains the size information about the areas allocated in the HDD 250 (i.e., the size information about the temporary recording area B1 and the long-time period recording area A). For example, if the HDD 250 has a capacity of 40 Gbytes, and allocates 10 Gbytes and 20 Gbytes to the storage areas B1, respectively, the HDD 250 contains the size information of 10 Gbytes and 20 Gbytes with respect to each storage areas B1, A. Preferably, the size information stored in the setting value storage unit 259-2 can be re-allocated through an on-screen display (OSD) which is realizable through the television 100 in combination with the remote controller 300.

The area setting unit 259-3 re-sets the addresses of the temporary recording area B1 and the long-time recording area A of the HDD 250 based on the FAT information and the size information about the areas, respectively applied from the FAT information reading unit 259-1 and the setting value storage unit 259-2, and applies the re-set addresses to the main control unit 270. The main control unit 270 perceives the locations to store the temporary files, and files based on the address information applied to the area setting unit 259-3. As a result, even when the temporarily files of the temporary recording area B1 are stored in the permanent basis, the storage space of the temporary recording area B1 is not reduced.

Figure 8 is a diagram illustrating the file arrangement structure of the HDD 250 of Figure 2 and also the method of storing the temporary files.

HDD 250 contains the long-time period recording area A and the temporary recording area B1 for storing the image/sound signals being applied from a signal source (not shown). In the case of the broadcasting signal source, the HDD 250 contains the temporary recording area B1 which buffers the received signals for a predetermined viewing time, such as one hour, without requiring a separate command from the user. The image/sound signals of one hour length are recorded in the temporary recording area B1 of the HDD 250 on a FIFO basis, and when the temporary recording area B1 is full, the image/sound signals are deleted in the recording order, and new image/sound signals are recorded in the deleted area.

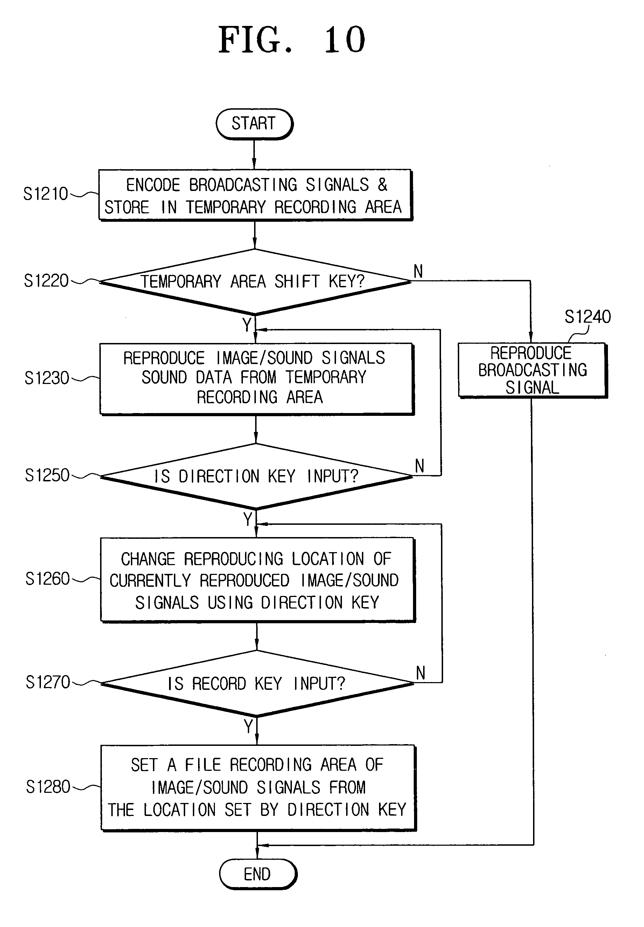

As shown, the HDD 250 has a boot recording area for the booting operation, a FAT area to record the information about the location of the file recorded in the HDD 250 (i.e., to record the information about the file address), a temporary recording area B1 to temporary record the currently-viewing broadcasting signal among the broadcasting signals in MPEG format for a predetermined time unit, and a long-time period recording area A to permanently record the broadcasting signal in MPEG format and the image/sound signals read from the recording medium loading unit 257. Among the respective areas, the temporary recording area B1 and the long-time period recording area A take a FIFO data storage pattern in which data is deleted in the recorded order. More specifically, as shown in Figure 10, data is stored in the temporary recording area B1 in the sequential order of Nos. 1 to 9. When the temporary recording area B1 becomes full with the stored data, data is deleted from data No. 1, and new data is stored therein.

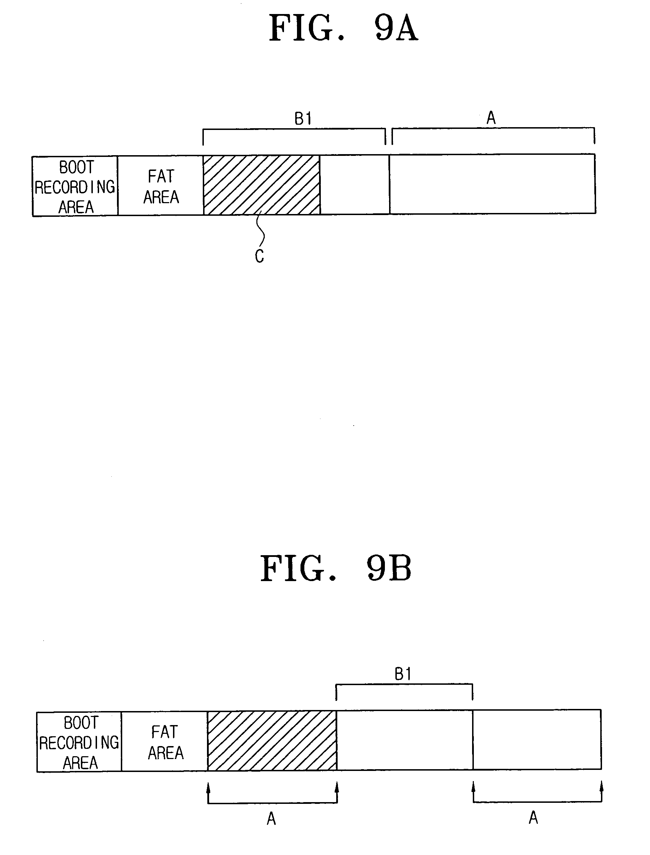

Figures 9A and 9B are block diagrams illustrating the process in which the temporary recording area B1 and the long-time period recording area A are re-allocated by the data management unit 259.

Figure 9A illustrates the storage area of the image/sound signals being recorded in the temporary recording area B1 of the HDD 250 in accordance with the currently-reproduced broadcast signals on the television 100. The reference character 'C' refers to a temporary file which is being recorded in the temporary recording area B1.

Figure 9B illustrates a process in which the temporary recording area B1 of the HDD 250 is re-allocated when the temporary file C of Figure 9A is recorded in the HDD 250 as a permanent file in accordance with the control by the main control unit 270, responding to the recording key 325 of the remote controller 300.

As the temporary data C becomes permanent data, the storage area of the temporary recording area B1 of Figure 9A is reduced. On the contrary, the long-time period recording area A, which additionally contains the temporary file C, has an increased storage. Such changes in storage of the respective areas are recorded in the FAT area, and according to the information about the storage changes, the data management unit 259 reduces the long-time recording area A and also re-allocates more space to the temporary recording area B as much as the amount of the temporary file C. Accordingly, even when the temporary file C becomes the permanent data, there is no change of the size of allocated areas in the HDD 250.

Figure 10 is a flowchart illustrating a method of storing temporary file of the image recording/reproducing apparatus according to the present embodiment.

The broadcasting signal from the tuner 221 is encoded into an MPEG format, and stored in the temporary recording area B1 of the HDD 250 (step S1210). The image/sound signals, being stored in the HDD 250, are reproduced through the television 100 via the main control unit 270, the image encoder 237 and the sound D/A converter 235. The image/sound signals corresponding to the currently-viewed broadcast programme are reproduced through the television 100. Accordingly, the HDD 250 continuously stores the image/sound signals incoming on a FIFO basis into a predetermined storage space (e.g., 10 Gbytes). At this time, if the temporary area shifting key (not shown) of the remote controller 300 is pressed ("Yes" path from decision step S1220), the image/sound signals are reproduced from the temporary recording area B1 from the first portion (step S1230). During the reproducing of the image/sound signals, the image/sound signals from the MPEG encoder 241 are continuously recorded in the temporary recording area B1. If the temporary area shifting key (not shown) is not pressed, the image/sound signals applied from the MPEG encoder 241 are reproduced through the television 100 via the main control unit 270, the image encoder 237 and the sound D/A converter 235 (step S1240).

During the process in which the image/sound signals of the temporary recording area B1 are reproduced through the television 100, if the direction keys 317, 319, 313, 315 are pressed (decision step S1250), the reproducing location of the image/sound signals is varied through the direction keys 317, 319, 313, 315 (step S1260; "Yes" path from decision step S1250). More specifically, pressing on the left direction key 313 will cause the reproducing location to change to the previous location, and the right direction key 315 will cause the reproducing location to change to the next location. Accordingly, the user can searches for his desired reproducing location by pressing on the direction keys 317, 319, 313, 315.

When the desired reproducing location is selected with the manipulation on the direction keys 317, 319, 313, 315, the user presses the recording key 325 of the remote controller 300 (decision step S1270). Accordingly, from the location where the recording key 325 is pressed, the image/sound signals of the temporary recording area B1 are shifted to the permanent file (step S1280; "Yes" path from decision step S1270). The data management unit 259 re-sets addresses with respect to the temporary recording area B1 and the long-time period recording area A based on the FAT information and the size information about the respective areas received respectively from the FAT information reading unit 259-1 and the setting value storage unit 259-2, and applies the re-set addresses to the main control unit 270. The main control unit 270 perceives the location to store the temporarily file and the file data, with reference to the address information being applied from the area setting unit 259-3. Accordingly, even when the temporary image/sound signals of the temporary recording area B1 are stored permanently, the storage space of the temporary recording area B1 does not decrease. Further, when the user wants to store the currently-viewed broadcast signals, the user can store the signals in the HDD 250 at a location as desired.

The third preferred embodiment of the present invention is preferably aimed to achieve the third aspect of the present invention, according to which an image recording/reproducing apparatus is capable of dividing the HDD 250 into a plurality of certain sized clusters, and recording the files in the corresponding clusters according to the type of the files. Hereinbelow, the image recording/reproducing apparatus and the control method thereof according to the third preferred embodiment of the present invention will be described in detail with reference to Figures 2 and Figures 11 to 13B.

According to the third preferred embodiment of the present invention, the storage space of the HDD 250 is divided into a data recording area and a user recording area. The data recording area records motion picture data, and includes a data attribute information area therein. The data attribute information area records the attribute information such as recording date, file size and filename extension. When the data is recorded in the HDD 250, the main control unit 270 searches the attribute information of the data contained in the recording data, and records the searched information in the data attribute information area.

The user recording area records additional information which is edited by the user with respect to the motion picture data. The information for recording in the user recording area can include, for example, data name and directory.

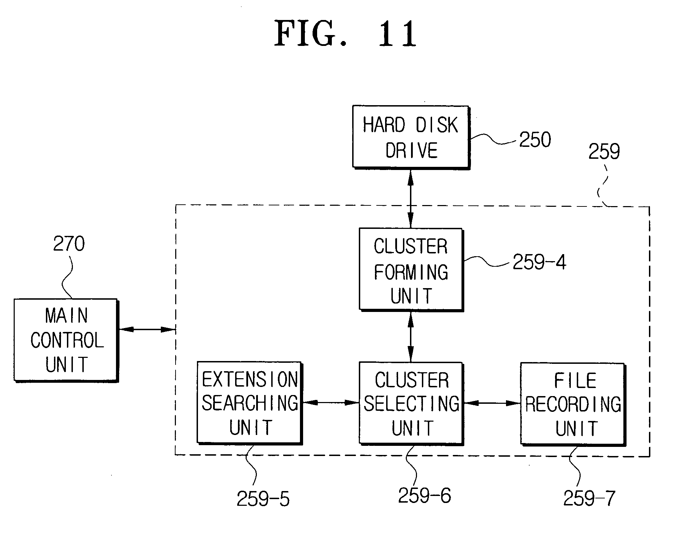

Referring to Figure 11, the data management unit 259 includes a cluster forming unit 259-4, an extension searching unit 259-5, a cluster selecting unit 259-6 and a file recording unit 259-7. The respective units are controlled by the main control unit 270, which will be described in greater detail below.

In order to format the HDD 250, a secondary screen for dividing the HDD 250 into a plurality of clusters of various sizes, is displayed on the television 100 under the control of the main control unit 270. The secondary screen is displayed for the selection of the user on the size of the clusters through the menu guide processing unit 277a of the flash memory 277, under the control by the main control unit 270.

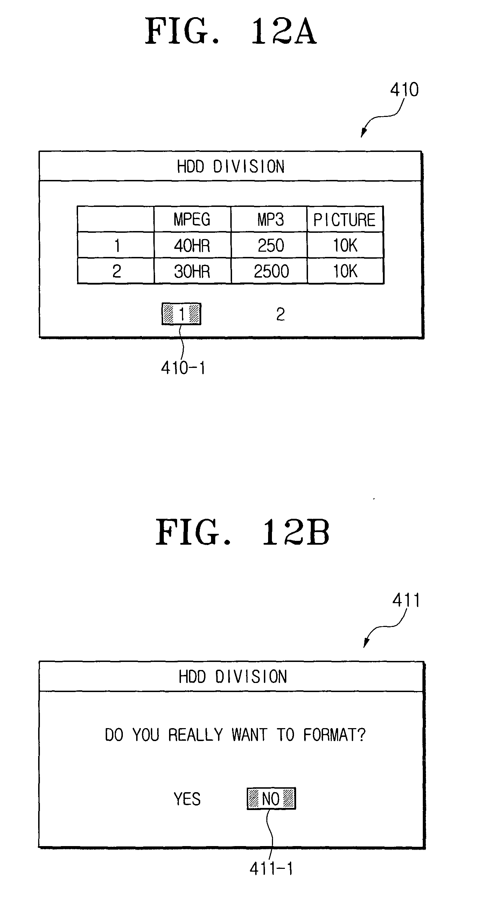

Figure 12A shows one example of the secondary screen 410 mentioned above. As shown in Figure 12A, the secondary screen enables the user to select a desired cluster size in formatting the HDD 250, so as to enable the user to select a desired format type through simple key manipulation to format the HDD 250. For example, if the user moves the selection cursor 410-1 to select item No. 1, the HDD 250 is divided and formatted such that memory for 40-hour length for the MPEG motion picture, and memory for 250 MP3 files and memory for 10,000 picture files, are respectively allocated.

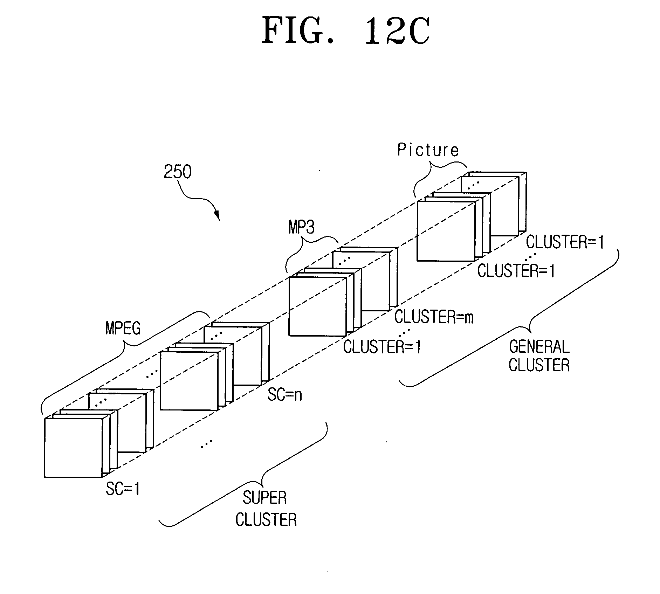

The cluster forming unit 259-4 forms a plurality of clusters of different sizes in the formatting of the HDD 250. The respective clusters of respective sizes are formed in accordance with the HDD division option determined through the secondary screen of the television 100. In formatting, a super cluster having large capacity, i.e., the cluster consisting of plural regular clusters, is set for the MPEG files, while the regular clusters are set for the MP3 and picture files (see Figure 12C).

An example of arrangement of the clusters by the cluster forming unit 259-4 is illustrated in Figure 12C. As shown in Figure 12C, a plurality of steps can be formed for the clusters of respective sizes, and a plurality of clusters can be formed per each size of the cluster. Further, in order to sort the data (files) for storage into corresponding storage positions (i.e., in order to make sure that the data is recorded in the corresponding area), a table of extensions as below is pre-stored.

**TABLE 1**

| Categories | Extensions |
|---|---|
| Motion picture files | WVV, VBS, MPV, DAT, VOB, MPG, MOV |
| Still image files | JPG, JPE, TIF, PSD, WMF, CLP |
| Sound files | WAV, MP3, MMP, AC3, DTS, DMC, ABX, MPA, WMA, ASF |

Referring to the Table 1, the files with extensions such as '*.mpg' and '*.dat' are categorized into motion picture files and thus stored in the motion picture area which is formatted into the super cluster. The files with extensions such as '*.jpg', and '*.tif' are categorized into still image files and stored in the still image area which is formatted into general cluster. Further, the files with extensions such as '*.mp3' and '*.ac3' are categorized into sound files and stored in the sound area.

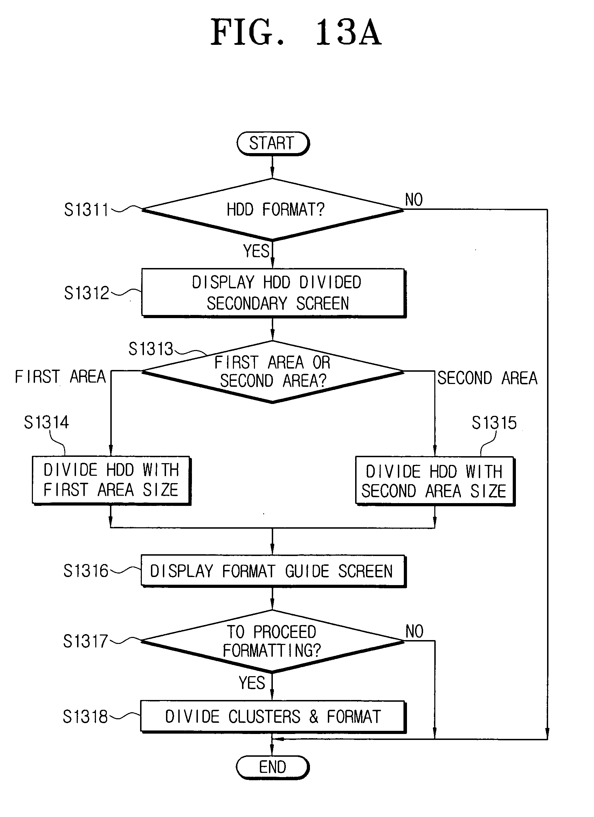

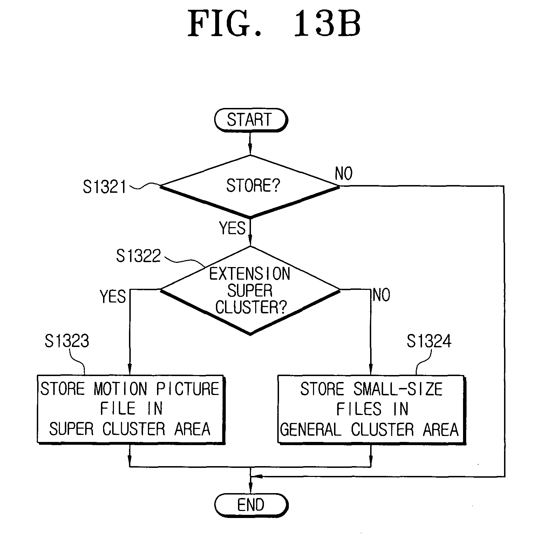

Figure 13A is a flowchart illustrating the method of dividing and formatting the clusters, and Figure 13B is a flowchart illustrating the method of storing the files in the divided clusters. In decision step S1311, the main control unit 270 determines whether to format a HDD 250. If not, no further action is taken, and the method terminates ("No" path from decision step S1311). If it determined that the HDD 250 is to be formatted ("Yes" path from decision step S1311), the main control unit 270 provides controls such that a sub-screen is displayed on the television 100 and the way of dividing the HDD 250 is selected (step S1312). When the user selects a certain HDD division method from the sub-screen (decision step S1313), the cluster forming unit 259-4, under the control of the main control unit 270, forms the HDD 250 into a plurality of clusters of different sizes as selected (step S1314, S1315). For example, to select the division method designated "First Area" of Figure 13A, is to select that the HDD 250 be divided and formatted so that it has the capacity for recording approximately 40 hours allocated for an MPEG motion picture; a capacity for 250 files is allocated for the MP3 files; and a capacity for 10,000 files is allocated for the picture files. It is preferred that the cluster for MPEG files be constructed as a super cluster of large capacity which is comprised of a plurality of general clusters, while the general clusters are allocated and formatted for the MP3 and picture files. It is more preferred that a screen 411 (Figure 12B) be displayed to ask whether the user wants to proceed to formatting or not, so that data deletion does not occur by mistake (step S1316). A screen 411 asks the user whether to proceed to the formatting step or not is displayed on the television 100 under the control of the main control unit 270 (step S1317). If the user decides to proceed to the formatting through the key input unit 260 or the light receiving unit 280 ("Yes" path from decision step S1317), the HDD 250 is divided into corresponding clusters and formatting begins (step S1318). To ensure that the user does not make a mistake in selecting formatting, it is preferred that the selecting cursor 411-1 be placed on the 'NO' button by default. Then, through either the key input unit 260 or the light receiving unit 280, the user moves the cursor 411-1 to the 'YES' and selects when the user wants to select formatting.

Referring to Figure 13B, in order to store the files in the formatted HDD 250 (step S1321), under the control of the main control unit 270, the extension searching unit 259-5 searches the extension information of the files from the attribute information contained in the files for recording (step S1322).

When the extension searching unit 259-5 searches the extension information of the files, the cluster selecting unit 259-6 compares the extension information searched under the control of the main control unit 270 with the extension table stored in the cluster forming unit 259-4, and finds the cluster having the extension which matches with the extension information. The file recording unit 259-7 records the files in the cluster of appropriate size, which is searched by the extension searching unit 259 according to the control by the main control unit 270 (step S1323, S1324).

Because the file recording unit 259-7 records the files in the clusters having the same extension due to the cluster selecting unit 259-6, the space utilization of the HDD 250 is optimized. The files requiring large capacity such as motion picture files are stored in the super cluster so that data can be stored using a fewer amount of clusters. Also, because the files requiring small capacity such as still image files and sound files are stored in the general clusters, memory loss, which occurs due to use of relatively large-sized cluster, can be avoided.

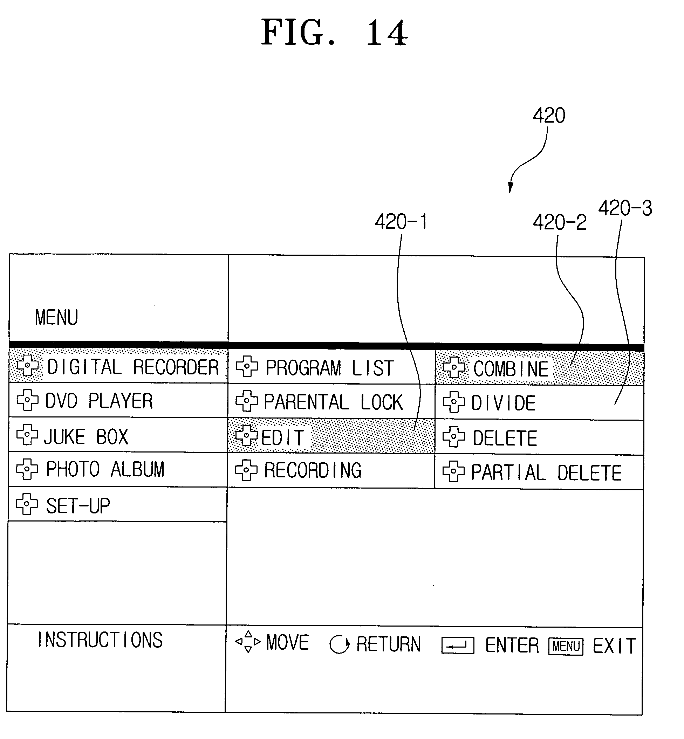

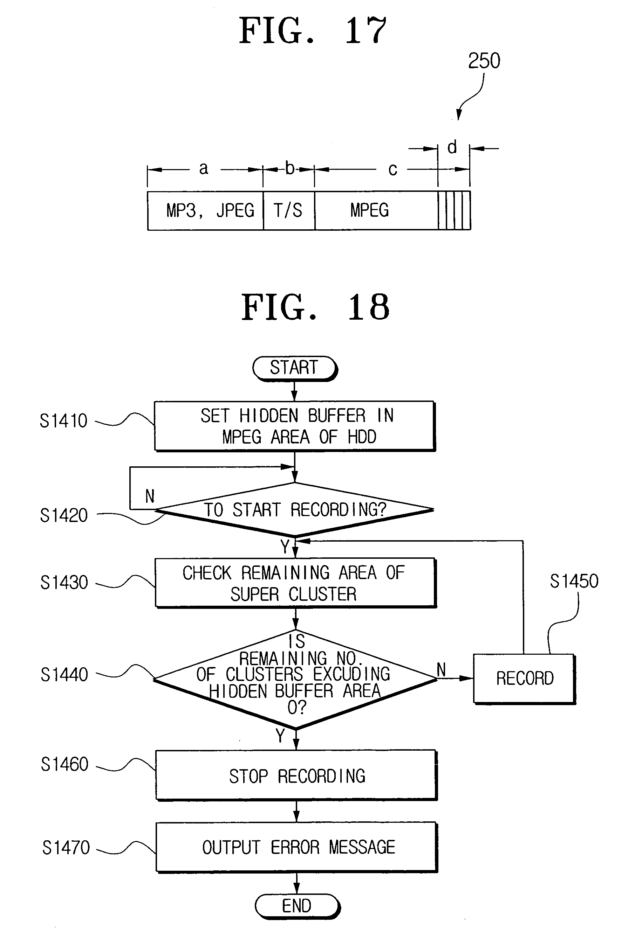

The fourth preferred embodiment is preferably aimed to achieve the fourth aspect of the present invention, according to which an image recording/reproducing apparatus is capable of controlling an editing function with respect to the recorded data in the HDD 250 using a menu guide list. Hereinbelow, the image recording/reproducing apparatus and the control method thereof according to the fourth preferred embodiment of the present invention, and particularly the displaying of menu guide list on the television 100 and the editing of recorded image signal data using the displayed menu guide list, will be described in detail with reference to Figures 14 and 18.

According to the fourth preferred embodiment of the present invention, the data management unit forms a plurality of clusters of different sizes when formatting the HDD 250. A plurality of steps can be formed for the clusters of respective sizes, and a plurality of clusters can be formed per each size of the cluster. In recording the files, a cluster of appropriate size is searched for the capacity of the file to be recorded so that the files can be recorded in appropriate size clusters.

Figure 14 shows an example of menu guide list screen wherein the menu guide list screen 450 displays a main menu. The main menu includes a digital recorder menu for managing data recorded in the HDD 250, a DVD player menu for controlling the programmes stored in the recording medium loading unit 257, and other menus such as "Juke Box" menu, "Photo Album" menu and "Set Up" menu.

If the digital recorder menu is from the main menu for the management of programmes stored in the HDD 250, sub-menus of the digital recorder menu are displayed in a vertical row on the same screen with the main menu. The sub-menus can include programme list menu, parental lock menu, editing menu and recording menu.

On the lower part of the screen, usage information for the key manipulation of the remote controller 300 corresponding to the menu guide list screen 450 is displayed.

If the editing menu 420-1 is selected from the sub-menus to edit the programme stored in the HDD 250, the main control unit 270 processes the selection such that the second sub-menu can be displayed on the menu guide list screen. The second sub-menus are for the editing of programmes stored in the HDD 250, and includes menus such as combine menu, divide menu, delete menu and partial delete menu.

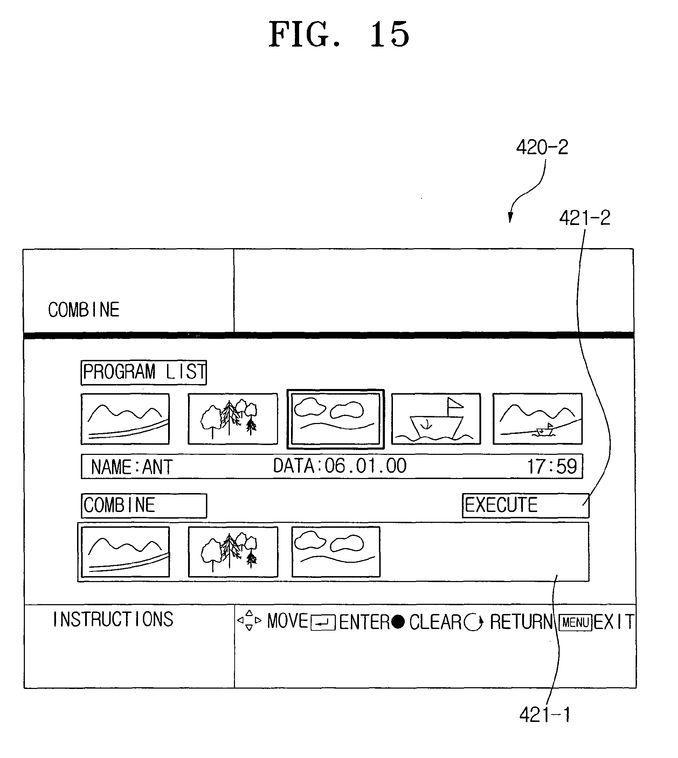

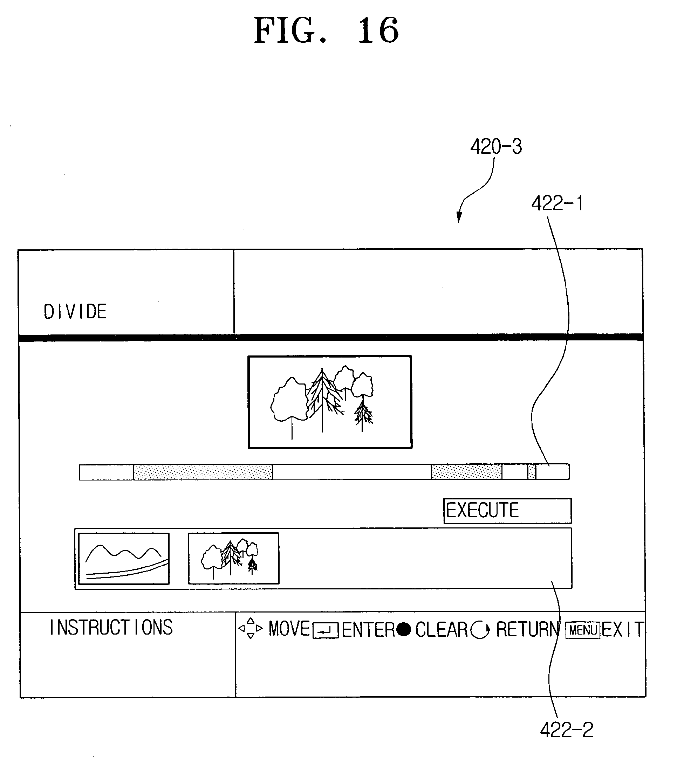

Referring now to Figures 15 and 16, the combine menu 420-2 and the divide menu 420-3 among the sub-menus of the editing menu 420-1 will be described in detail.

The combine menu 420-2, which is the one of the sub-menus of the editing menu 420-1 of Figure 14, supports the combining job which enables the user to combine the programmes written in the HDD 250 with each other. If the combine menu 420-2 is selected, the main control unit 270 provides the corresponding screen as shown in Figure 15, and extracts still images of the programme guide information, which is viewed upon selection of programme list key, and displays the extracted images in list-up screen on the middle area of the screen in a sequential order and also in the number corresponding to the preset displayable number. The main control unit 270 processes the images such that they are displayed on the combine window which is provided at the lower portion of the middle area, as the images are selected from the upper area of the screen by the user for the combining job. After that, if the execute menu 421-2 is selected, the main control unit 270 combines the selected programmes corresponding to the images displayed in the combine window, and processes the selected programmes such that they can be recorded as a new file.

The divide menu 420-3 supports the dividing job, which divides the programme recorded in the HDD 250 from a single file into a plurality of files. If the divide menu 420-3 is selected, as shown in Figure 16, the list of still images corresponding to the programmes recorded in the HDD 250 is displayed in the upper part of the middle area, and the user can divide as desired by adjusting the bar-type graph representing the length of the selected still image, or by manipulating the remote controller 300 with respect to the bar-type graph.

In order to execute the editing menus as described above, a predetermined capacity in the HDD 250 is necessary.

The construction of the data, which is recorded in the HDD 250 of the image recording/reproducing apparatus having such editing function, is shown in Figure 17. In Figure 17 the data recording area of the HDD 250, which is the large-capacity HDD of the image recording/reproducing apparatus 200, includes a 'mp3' and 'jpeg' file recording area (a), a time shift area (b) and a mpeg file recording area (c).

According to the fourth embodiment of the present invention, a hidden buffer area (d) is set for the 'mpeg' file recording area (a). A predetermined number of clusters of the 'mpeg' file recording area (c) are set to be a hidden buffer among the clusters generated during the formatting of the HDD 250, and the clusters set for hidden buffer area (d) are excluded from the searching in file recording.

The hidden buffer area (d) is used for the editing of recorded data of the 'mpeg' file recording area (c) and the recording of the edited data.

Hereinbelow, the control method of the HDD according to the fifth preferred embodiment of the present invention will be described in greater detail with reference to Figure 18 and Figures 14 to 17.

By the input of a recording selection signal from the user, or in accordance with the information set by the timer recording function, the incoming motion picture data is recorded. The data is encoded in the MPEG encoder 241, and stored in the 'mpeg' recording area (c) of the HDD 250. It is preferred that the data are encoded to MPEG file by the MPEG-2 compression.

The hidden buffer area (d) is set in the 'mpeg' recording area (c) of the HDD 250 (step S1410). With the beginning of the recording ("yes" path from decision step S1420), the main control unit 270 checks the super cluster and counts the number of unused clusters (steps S1420, S1430). Because the area needed for the editing of data is set as the hidden buffer, the number of unused clusters (i.e., the number of the clusters) is counted from the 'mpeg' recording area excluding the hidden buffer area.

It is then determined whether the number of clusters remaining in the recording area, excluding the hidden buffer area, is '0' (decision step S1440). If it is determined in decision step S1440 that the number of unused clusters is not '0' ("No" path from decision step S1440), recording is performed on the remaining clusters (step S1450), and the process returns to the checking step S1430. If the number of clusters is determined to be '0' in decision S1440, recording is stopped (step S1460; "Yes" path from decision step S1440), and an error message is displayed on the TV screen, notifying that it is the maximum of the storage limit of the HDD 250 (step S1470).

In order to edit the stored programmes with the above processes using menus such as combine menu, divide menu and delete menu, the editing is performed by using the clusters of the hidden buffer area (d). Because the highest number of clusters are needed for the divide menu among other menus, the capacity of the hidden buffer is determined based on the clusters for the divide menu. Accordingly, as the motion picture data is recorded in the HDD 250, excluding the area set for the editing of programmes, the inability to edit the stored data due to shortage of HDD for the editing purpose can be prevented.

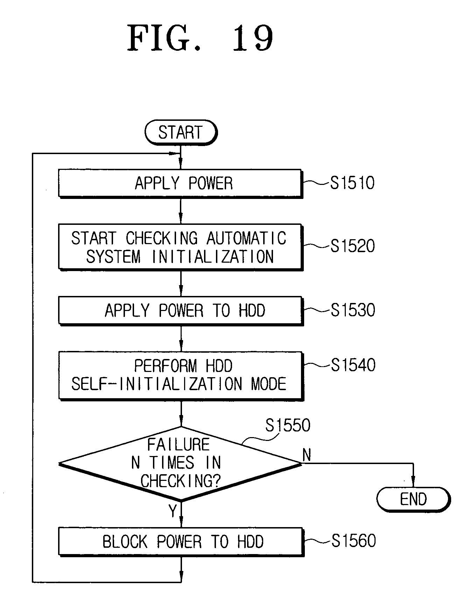

The fifth preferred embodiment is especially aimed to achieve the fifth aspect of the present invention, according to which an image recording/reproducing apparatus is capable of preventing system booting error due to delay in the initialization of the HDD 250. Hereinbelow, the image recording/reproducing apparatus and control method thereof will be described with reference to Figures 2 and 19.

With reference to Figure 2, when it is determined through the error detecting unit 245 that an error has occurred in the operation of the HDD 250, the main control unit 270 controls the power control unit 291 to control the power supply unit 293 in supplying power to the image recording/reproducing apparatus so that the image recording/reproducing apparatus including the recording medium loading unit 257 and the HDD 250 can be re-driven. According to the command for system re-driving transmitted from the main control unit 270, the power control unit 291 controls the power supply unit 293 so that the power supply can be stopped and then re-started.

The initialization of the image recording/reproducing apparatus constructed as above will be described in greater detail below.

As the system is powered on by the power supply, initialization is automatically performed in the respective constituents parts in a sequential order of power reception. When the power is applied to the HDD 250, self-initialization mode of the HDD 250 is performed.

The power-on-ready of the HDD 250 includes the processes of unlatching the parked head to the outer-most side of the disk surface and performing calibration. After the calibration, the HDD 250 is shifted to drive ready mode.

The actuator is separated from the latch as the HDD 250 is powered on. If the actuator is not positioned as predetermined, or if internal problem occurs in the drive, the self-initialization of the HDD 250 is postponed.

The HDD 250 is in busy mode during the self-initialization, and accordingly, cannot communicate. If abnormal operation occurs, or if the actuator is erroneously positioned, the initialization is not completed properly and therefore keeps the busy mode even when the HDD 250 is powered on.

According to the fifth embodiment of the present invention, the main control unit 270 determines whether the initialization of the HDD 250 is properly over during the self-initialization process. If the main control unit 270 checks the 'failure' over a predetermined number of times, the main control unit 270 outputs a control signal to the power control unit 291 to block the power from the HDD 250.

The system is then reset and re-powered so that the system re-starts the automatic initialization. The HDD 250 also re-starts the self-initialization. Accordingly, booting errors due to the delay of self-initialization of the HDD 250 can be avoided.

Referring to Figure 19, the initialization method of the image recording/reproducing apparatus according to the fifth embodiment of the present invention will be described in detail.

In step S1510 the system is powered on, and then the system automatically performs an initialization (step S1520). The respective parts of the system are also initialized in the order of receiving power from the power supply. When power is supplied to the HDD 250 (step S1530), the HDD 250 performs the self-initialization mode (step S1540). During the self-initialization of the HDD 250, checking is performed to see whether the initialization is over (decision step S1550). If it is checked as 'failure' in S1550 for more than a predetermined number of times ("Yes" path from decision step S1550), the power control unit 291 controls the power supply unit 293 according to the control signal of the main control unit 270 to block the power from being supplied to the HDD 250 (step S1560). The main control unit 270 resets the system so that the system is re-powered on. As described above, if there is delay in the initialization of the HDD 250, the system is automatically reset, and the booting error due to the standby of the system can be avoided.

The sixth preferred embodiment is preferably aimed to achieve the sixth aspect of the present invention, according to which an image recording/reproducing apparatus is capable of recording the image/sound signals in the HDD 250 in accordance with the pattern of the TV broadcasting which is detected during the reproducing process. Hereinbelow, the image recording/reproducing apparatus and control method thereof according to the sixth preferred embodiment of the present invention will be described with reference to Figures 1, 2, 5 and 20.

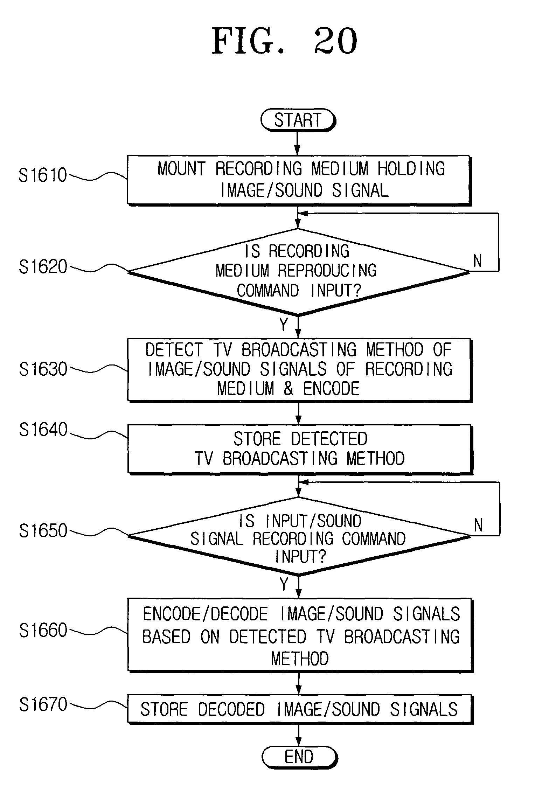

Figure 20 is a flowchart illustrating the process in which the TV broadcasting method of the image/sound signals of the recording medium is detected by the image recording/reproducing apparatus according to the sixth embodiment of the present invention and the detected TV broadcasting is applied in the recording of the image/sound signals in the HDD 250.

The method for detecting the TV broadcasting method of the image/sound signals begins when the user mounts the recording medium containing image/sound signals such as DVD on the recording medium loading unit 257 (step S1610).

Next, through the key input unit 260 or the remote controller 200, the user inputs mode change command with respect to the DVD mode/HDD mode to change the mode of the image recording/reproducing apparatus 100 to DVD mode. The user also inputs a reproducing command through the key input unit 260 or the remote controller 300 (decision step S1620). Accordingly, the main control unit 270 outputs image/sound signals to the television 100 which is connected with the line image/sound output terminal 216. At this time, by the control of the main control unit 270, the image/sound signals loaded from the DVD are decoded through the MPEG decoder 273.

Encoding is performed through the image encoder 237, and during the encoding, TV broadcasting method of the loaded image/sound signals is detected, and encoding is performed according to the detected result (step S1630).

The main control unit 270 stores the information about the TV broadcasting method in the register (not shown) of the image decoder 231 (step S1640).

If the user selects the record key 325 to record the image/sound signals of the DVD, the corresponding record command is inputted to the main control unit 270 (decision step S1650).

The main control unit 270 controls the image encoder 237 based on the record command as input so that the image/sound signals of the DVD can be encoded and decoded based on the appropriate TV broadcasting method. This will be described in greater detail below.

The image/sound signals of the DVD mounted in the recording medium loading unit 257 are loaded and temporarily stored in the second SDRAM 276. The temporarily-stored image/sound signals are decoded in accordance with the compression format set by the MPEG decoder 273 under the control of the main control unit 270, and output to the image encoder 237 also under the control of the main control unit 270. Accordingly, the image encoder 237 encodes the input image/sound signals, in accordance with the TV broadcasting method by which the image/sound signals are recorded in the DVD. The encoded image/sound signals are input to the switching unit 223 where it is determined under the control of the input/output control unit 225 whether the signals are to be output to the output end, or to the image decoder 231. In recording image data of the DVD into the HDD 250, the input/output control unit 225 controls the switching unit 223 so that the image/sound signals are output to the image decoder 131, and the encoded image/sound signals are accordingly output to the image decoder 231. The image decoder 231 decodes the encoded image/sound signals based on the setting values of the TV broadcasting method which are stored in the register (step S1660).

After the decoding, the image/sound signals are output to the MPEG encoder 241. The MPEG encoder 241 encodes the received image/sound signals in accordance with a preset compression format, and the signals are stored in the HDD 250 (step S1670).

The seventh preferred embodiment of the present invention is especially aimed to achieve the seventh aspect of the present invention, according to which an image recording/reproducing apparatus is capable of performing a flush function with respect to temporarily-recorded image/sound signals, in response to a shift command to power-off mode during the recording process of image/sound signals with respect to the HDD. Hereinbelow, the image recording/reproducing apparatus and control method thereof will be described in detail with reference to Figures 1 and 2, and Figures 21 to 23.

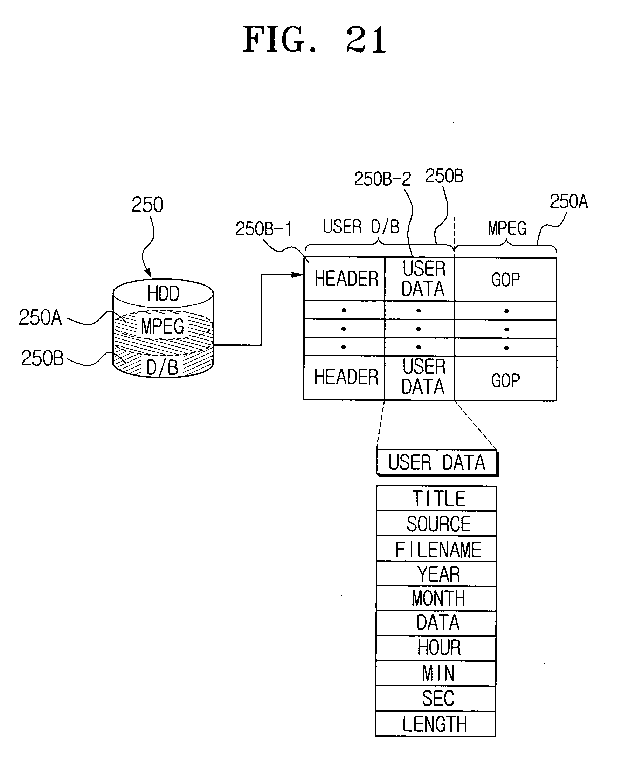

Figure 21 is a view for the explanation of the programme files, which are the motion picture files being recorded in the HDD 250. Referring to Figure 21, an automatic deletion of error file according to the seventh preferred embodiment of the present invention will be described in detail.

A programme file includes a header 250B-1 which indicates location information of the programme file being recorded in the HDD 250, a user data 250B-2 which indicates file information of the programme file, and a GOP (group of pictures) data 250A which is the group of image data encoded in the MPEG encoder 241.

For the efficient management of programme files, it is preferred that recording is performed with respect to user D/B 250B and GOP data 250A of HDD 250, which are provided correspondingly to the header 250B-1 and user data 250B-2, respectively.

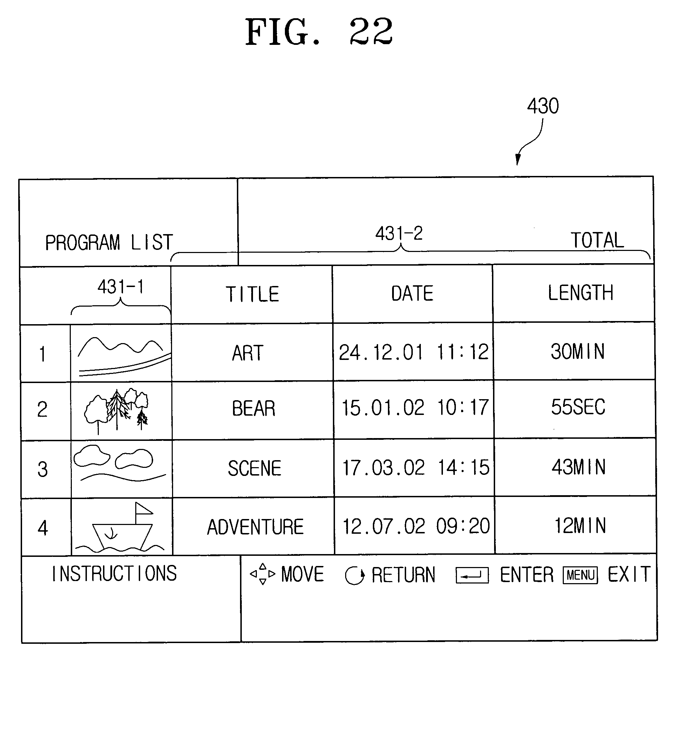

The user D/B 250B includes source information of the still screen, which indicates the information of the still image being displayed with the programme list, and also includes data such as programme title, file name, length of reproducing, and year/month/date/hour/minute/second of the recording. Accordingly, in the programme list function, the programme list is displayed on the screen of the display device using the user D/B 250B recorded in the HDD 250 (see Figure 22).

Hereinbelow, the process of deleting error file generated in the HDD 250 according to the seventh preferred embodiment of the present invention will be described with reference to Figures 2 and 21.

As an example, certain channel broadcasting signals selected as the recording data are recorded in the HDD 250 of Figure 2 in the programme file. That is, as the record command is input to the light receiving unit 280 to request the recording of certain channel broadcasting signals, the main control unit 270 controls the input/output control unit 225 so that the certain channel broadcasting signal is tuned by the tuner 221. The switching unit 223 selects the channel broadcasting signals being received from the tuner 221, and the signals are processed through the image decoder 231 and the sound A/D converter 233 and input to the MPEG encoder 241. The MPEG encoder 241 encodes the processed broadcasting signals and generates GOP data 250A of the programme file. At the same time, the user data 250B-2 including title of the channel broadcasting signals, location information of still screen, and time, length and name of the file is generated. The user data 250B-2 is stored in the second SDRAM 276 in temporary buffer.

When the recording of the channel broadcasting signals is completed and a stop command is input through the light receiving unit 280, the main control unit 270 constructs the user D/B 250B in the HDD 250 with the temporary buffer of user data 250B-2 of the second SDRAM, and stores the same. As a result, the user data 250B-2 is constructed as the user D/B 250B in the HDD 250 at a predetermined allocated address 250B-1, and the programme file having the GOP data 250A corresponding to the user D/B 250B is also recorded.

Meanwhile, an accident may happen especially when the recording has just completed, such as a sudden blackout before the stop command is input. If this happens, the image recording/reproducing apparatus is suddenly turned off, and an error file (i.e., abnormal programme file) can be recorded in the HDD 250. According to the seventh preferred embodiment of the present invention, the temporary buffer of the user data 250B-2 of the second SDRAM 276 is not recorded in the HDD 250 if the error file is generated in this regard.

The error determining unit 275 determines the error file by checking the presence of user data 250B-2, when the main control unit 270 reads the user D/B 250B of the programme file recorded in the HDD 250. The main control unit 270 controls the HDD 250 to delete the error file determined by the error determining unit 275.

The error file of the HDD 250 can be deleted automatically at a time point when the image recording/reproducing apparatus is turned on/off, or when the function of displaying the programme list of the HDD 250 is executed.

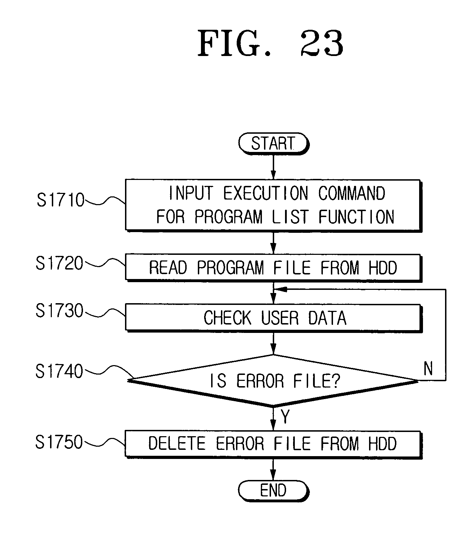

Referring to Figure 23, the error file deletion of the image recording/reproducing apparatus according to the seventh preferred embodiment of the present invention will be described especially with respect to an example where the error file is deleted during the programme list function.

When the execution command for programme list function is input through the input unit such as the light receiving unit 280, the main control unit 270 reads the user D/B 250B among the programme files recorded in the HDD 250, and displays the programme list as shown in Figure 22 on the screen in the form of electronic programme guide (EPG ). Figure 22 additionally shows the still images 431-1 of certain image data of the programme files, and file information 431-2 about the user data of the respective programme files.

If the execution command for programme list function is input through the light receiving unit 280 (step S1710), the main control unit 270 reads the user D/B 250B of the programme files recorded in the HDD 250 (step S1720).

The error determining unit 275 then checks the user data of the programme files read by the main control unit 270 (step S1730). If the checked result indicates that the programme file is an error file in which the user data is missing (step S1740), the main control unit 270 controls the HDD 250 to erase the error file (step S1750).

If the programme file is determined to be the normal file having the user data ("No" path from decision step S1740), the error determining unit 275 checks the programme file next to the programme file read by the main control unit 270 (step S1730).

Thus, an example of deleting an error file during the execution of programme list function has been described. However, this should not be taken to be limiting. For example, the error file can also be deleted automatically with the turning on/off of the image recording/reproducing apparatus, among other scenarios.

According to the first preferred embodiment of the present invention, in the process of timer recording or real-time recording, the recording data is temporarily recorded in the temporary recording area inside the HDD 250 and then recorded in the actual recording area such as permanent recording area inside the HDD 250. Then, if the operating mode shifts to a power-off mode, the flush function is performed, so that the recording data in the temporary recording area is recorded in the permanent recording area. As a result, even when the operation switches to the power-off mode unexpectedly, data loss at the temporary recording area can be avoided.

According to the second preferred embodiment of the present invention, in the image recording/reproducing apparatus receivable with the broadcasting signals, the currently viewed image/sound signals can be recorded from a desired point of time, and during the recording of broadcasting signals, image/sound data of the temporary recording area remains in the same area. Because there is no need to move and copy the files of the temporary recording area to the permanent recording area, management and control of the recording device such as HDD 250 becomes easier.

According to the third preferred embodiment of the present invention, the HDD 250 is divided into a plurality of clusters with various sizes, and the files are selectively recorded in the clusters of appropriate sizes according to the file types. Accordingly, data management becomes more efficient.

According to the fourth preferred embodiment of the present invention, by setting a certain capacity as a hidden buffer for the editing of the programme during the recording of programmes in the HDD 250, image/sound signals are stored in the area other than the hidden buffer. As a result, inability to edit recorded image/sound signals due to shortage of capacity in HDD 250 can be prevented.

According to the fifth preferred embodiment of the present invention, if self-initialization of the HDD 250 is delayed during the system initialization, the system is reset automatically and therefore, a system booting error can be avoided.

According to the sixth preferred embodiment of the present invention, because the TV broadcasting method of the image/sound signals is automatically detected, noise or signal deformation due to different TV broadcasting methods can be prevented and as a result, system stabilization is guaranteed.

According to the seventh preferred embodiment of the present invention, because an error file of the HDD 250 of the image recording/reproducing apparatus is automatically erased, a greater amount of the space of the HDD 250 can be efficiently utilized.

## Claims

1. A video recording and reproducing apparatus comprising an television signal input (213), a hard disk drive (250) for recording television signals received at said input (213) and an optical disk drive (257), **characterised by** means (259, 270) for reading data from the optical disk drive (257) and recording it in the hard disk drive (250).

2. An image recording/reproducing apparatus comprising:
an input unit for receiving a record command, and directing image data stored in an optical recording medium to be recorded in an internal recording medium;
a video encoder for encoding the stored image data;
a video decoder for decoding the image data which is encoded by the video encoder; and
a main control unit for controlling the video encoder and the video decoder to perform encoding and decoding with respect to the image data stored in the optical recording medium in response to the input of record command through the input unit, and also controlling the video decoder such that the image data can be decoded based on a predetermined TV broadcasting method which is applied during the encoding, and processing the decoded image data for recording in the internal recording medium.

3. The image recording/reproducing apparatus of claim 3, wherein the video decoder comprises:
a register which records in a predetermined area the setting values with respect to a TV broadcasting method, and the main control unit provides a control to update the setting values of the TV broadcasting method based on the predetermined TV broadcasting method applied during the encoding, and controls the video decoder to decode the data based on the updated setting values of the TV broadcasting method.

4. A control method of an image recording/reproducing apparatus for recording image data stored in an optical recording medium onto an internal recording medium, the control method comprising the steps of:
encoding the image data stored in the optical recording medium in accordance with a predetermined TV broadcasting method;
detecting the predetermined TV broadcasting method which is applied during the encoding; and
decoding the encoded image data in accordance with the detected predetermined TV broadcasting method.

5. The control method of claim 4, wherein the predetermined TV broadcasting method is one of NTSC, PAL and SECAM.
